# EUROPÄISCHE PATENTANMELDUNG

(11) **EP 4 760 163 A1**
(43) Veröffentlichungstag der Anmeldung: **17.06.2026**
(21) Anmeldenummer: 25221711.2
(22) Anmeldetag: 09.12.2025
(51) Int. Cl.: F24H 15/12, B01J 20/20, F25B 49/00

(54) **SORPTIONSSCHLEUSE FÜR EIN KÄLTEKREISGEHÄUSE**

(30) Priorität: 10.12.2024 DE 102024136899
(71) Anmelder: Vaillant GmbH, 42859 Remscheid NRW (DE)
(72) Erfinder: Badenhop, Thomas, 42499 Hückeswagen (DE); Krampe-Zadler, Christof, 44628 Herne (DE)
(74) Vertreter: Popp, Carsten

(57) **Zusammenfassung**

Vorrichtung mit mehreren Sorptionsschleusen, in denen wenigstens jeweils ein Teil des Adsorptionsmittels hydrophobierte Aktivkohle ist. Hierbei wird vorgesehen, dass ein Kältekreisgehäuse, in welchem ein linksdrehender thermodynamischer Kreisprozess mittels eines gefährlichen Arbeitsfluids geführt wird, und in welchem Kältekreisgehäuse Sicherheitsventile und/oder Gasabscheider in wässrigen und/ oder kältemittelführenden Leitungen angeordnet sind, mit solchen Sorptionsschleusen fest verbunden werden. Sollte also eine Leckage auftreten, bewirkt der dabei entstehende Überdruck, dass das Luftgemisch aus dem Kältekreisgehäuse direkt zur Umwelt austreten kann.

## Beschreibung

Die Erfindung betrifft eine Vorrichtung für ein zur Umgebung hin offenes Adsorptionsfestbett, insbesondere als Schutzvorrichtung für den Einsatz als Sicherheitselement in Wärmepumpen mit entzündlichen und / oder toxischen Kältemitteln zur Hausenergieversorgung. Dabei dient die Erfindung dem Schutz des Adsorptionsmittels vor Co-Adsorption durch Wasser oder Wasserdampf.

Unter Hausenergieversorgung wird dabei die Wärmeenergieversorgung in Wohngebäuden wie Privathäusern, Miethauskomplexen, sowie in Krankenhäusern, Hotelanlagen, Gastronomiegebäuden und kombinierte Wohn- und Geschäftshäusern verstanden, in denen Menschen dauerhaft leben und arbeiten, im Unterschied zu mobilen Vorrichtungen wie KFZ-Klimaanlagen oder Transportboxen, oder auch Industrieanlagen oder medizintechnischen Geräten. Gemeinsam ist diesen Kreisprozessen, dass sie unter Einsatz von Energie Nutzwärme oder Nutzkälte erzeugen und Wärmeverschiebungssysteme bilden.

Die zum Einsatz kommenden thermodynamischen Kreisprozesse sind seit langem bekannt, ebenso die Sicherheitsprobleme, die bei der Verwendung geeigneter Arbeitsfluide entstehen können. Abgesehen von Wasser sind die bekanntesten damaligen Arbeitsfluide brennbar und giftig. Sie führten im vergangenen Jahrhundert zur Entwicklung der Sicherheitskältemittel, die aus fluorierten Kohlenwasserstoffen bestanden. Es zeigte sich jedoch, dass diese Sicherheitskältemittel die Ozonschicht schädigen, zur Klimaerwärmung führen, und dass ihre sicherheitstechnische Unbedenklichkeit zu konstruktiven Unachtsamkeiten führte. Bis zu 70 % des Umsatzes entfiel auf den Nachfüllbedarf undichter Anlagen und deren Leckageverluste, der hingenommen wurde, solange dies im Einzelfall als wirtschaftlich vertretbar empfunden wurde und Bedarf an Ersatzbeschaffung förderte.

Der Einsatz dieser Kältemittel wurde aus diesem Grund Restriktionen unterworfen, in der Europäischen Union beispielsweise durch die F-Gas-Verordnung (EU) 517/2014. Als Folge werden gerne brennbare Kältemittel verwendet, die klimaschädlichen Nachteile nicht aufweisen, dies sind vor allem R290 (Propan), R600a (Isobutan) und R1270 (Propen). Diese haben den weiteren Vorteil besonders hoher erreichbarer Wirkungsgrade, es müssen aber wegen der Brennbarkeit Vorkehrungen hinsichtlich der Sicherheit gegenüber Notfällen getroffen werden. Dies betrifft vor allem Leckagen nach Betriebsstörungen.

Die auftretenden Probleme bei der Sicherheitsauslegung solcher Anlagen werden in der EP 4 008 979 A1 anschaulich und ausführlich beschrieben. In vielen Fällen kommen daher Adsorber mit Aktivkohle oder anderen geeigneten Adsorptionsmitteln zum Einsatz. Im Adsorber wird dann das gegebenenfalls leckagebedingt ausgetretene Kältemittel gebunden und kann nicht in den Aufstellungsraum austreten, wobei der Adsorber typischerweise sowohl zum Ausstellungsraum hin und zum Gehäuseinneren der Anlage hin offen ist.

Die DE 10 2011 116 863 A1 beschreibt ein Verfahren zur Sicherung einer Vorrichtung für einen thermodynamischen Kreisprozess, welche mit einem Prozessfluid betrieben wird, das mindesten eine umweltgefährliche, giftige und/oder entzündliche Substanz enthält oder daraus besteht. Im Falle einer Leckage in der Vorrichtung für einen thermodynamischen Kreisprozess wird ein Adsorptionsmittel mit dem Prozessfluid, insbesondere Ammoniak, Propan oder Propen, in Kontakt gebracht und die Substanz durch das Adsorptionsmittel selektiv gebunden. Das Adsorptionsmittel wird nach Gebrauch regeneriert. Als Adsorptionsmittel werden Aktivkohle, Zeolith, auch in Kombination mit Imidazol oder Phosphaten, ferner CuBTC vorgeschlagen, das Ad¬sorptionsmittel kann in Form einer Schüttung, eines Formkörpers, eines Anstrichs, eines Sprühfilms oder einer Beschichtung ausgestattet sein. Die Trägerstruktur des Formkörpers kann aus Mikrostruktur, Lamellenstruktur, Rohrbündel, Rohrregister und Blech bestehen und muss mechanisch stabil sowie stark oberflächenvergrößernd sein. Eine Umwälzung der potenziell kontaminierten Luft erfolgt üblicherweise kontinuierlich, kann aber auch durch einen Sensor initiiert werden, der die Lüftung nach Erreichen eines Schwellenwerts oder bei einem erkannten Havariefall einschaltet. Die Adsorption kann innerhalb oder außerhalb eines geschlossenen Raumes, also innerhalb einer Kühlkammer wie in der DE 10 2011 116 863 A1 beschrieben, oder innerhalb eines Umschließungsgehäuses durchgeführt werden.

Die DE 10 2018 109 646 A1 beschreibt eine Vorrichtung zur Bewältigung einer Leckage eines Kältekreises einer Wärmepumpe, die mit einem brennbaren Kältemittel betrieben wird. Das Gehäuse wird hierfür mit Sorptionsmittel ausgekleidet und auch die Hohlräume werden mit Sorptionsmittel ausgefüllt, wobei auch gefüllte Kissen und imprägnierte Matten zum Einsatz kommen. Es werden hierbei aber nur gasförmig vorliegende Kältemittel abgeschieden, wobei dieses auch in einem unten angeordneten Behälter adsorptiv aufgenommen werden kann, aber die Gefahr, dass Wasserdampf oder flüssiges Wasser das Sorptionsmittel beeinträchtigen könnte, wird nicht adressiert.

Die DE 10 2023 100 552 A1 beschreibt ein Sorptionsverfahren zur Sicherung einer Wärmepumpe, bei dem im Kältekreisgehäuse der Wärmepumpe ein Sorptionsbett vorgesehen ist, an dessen Einlässen und Auslässen kontinuierlich die Konzentration von VOCs, Störgasen, gasförmigem Kältemittel, Wasserdampf, Druck und Temperatur gemessen werden und damit die Restkapazität des Sorptionsbettes bestimmt wird.

Ein weiteres Problem entsteht durch die Wärmetauscher innerhalb des Kältekreises und deren Sicherheitsventilen.

Nachteil dieser Adsorptionsmittel ist, dass diese meist hydrophil sind und zur Co-Adsorption von Wasserdampf neigen. Diese Co-Adsorption kann zu einer Kapazitätsminderung des Adsorptionsmittels für die Aufnahme des entzündlichen oder toxischen Kältemittels führen. Gemäß dem Stand der Technik werden solche potenziellen Kapazitätsminderungen durch eine Überdimensionierung des Adsorbers ausgeglichen. Dies führt zu größeren Absorbern, zusätzlichem Bauraum und zusätzlichen Kosten.

Die Aufgabe der Erfindung ist daher, die Aktivkohle so zu modifizieren, dass die Kapazitätsminderung nicht oder höchstens minimal eintritt und die so modifizierte Aktivkohle dazu so einzusetzen, dass leckagebedingt aus den Sicherheitsventilen ausgetretenes Kältemittel sicher abgeschieden wird. Dies wird dadurch erreicht, dass wenigstens ein Teil der Aktivkohle, die in einem der eingesetzten Adsorber eingesetzt wird, hydrophobiert wird.

Eine derartige Hydrophobierung von Aktivkohle ist aus anderen technischen Arbeitsgebieten bekannt und wird häufig als Imprägnierung bezeichnet. Das Hydrophobieren ist bekannt aus der Bauindustrie, dabei wird ein Baustoff hydrophobiert, was bedeutet, diesen wasserabweisend zu machen oder seine Wasseraufnahme zu reduzieren. Wird ein Baustoff mit einem Hydrophobierungsmittel versehen, werden die Poren und Kapillaren jedoch nicht verschlossen. Die Diffusionsfähigkeit des Baustoffes wird so gut wie nicht verändert und bleibt erhalten. Andere Anwendungen sind aus der Herstellung von Atemschutzfiltern, der Gasabscheidung und aus der Abwasserreinigung bekannt.

Die DE 299 622 A5 beschreibt geformte hydrophobe Mischadsorbenzien und Verfahren zu ihrer Herstellung. Deren Aufgabe ist es, auf der Basis von Aktivkohlen mit einem hohen Anteil von Supermikroporen und von hochsilikatischen Adsorbenzien mit exakt definierten Mikroporen und einem Bindemittel ein hydrophobes Eigenschaftsbild zu erreichen, bei dem die Adsorptionskapazität nicht vermindert wird. Damit sind organische Inhaltsstoffe aus wässrigen Lösungen abtrennbar und die Lösemitteldämpfe werden aus Abluft abgetrennt.

Die EP 785 840 B1 beschreibt eine Aktivkohle mit hydrophober Oberfläche und eine Verfahren zu dessen Herstellung. Ihr Einsatzzweck ist die Reinigung von Grundwasser, das mit einer leichtflüchtigen organischen Chlorverbindung verunreinigt ist. Hierzu wird die Aktivkohle mit Trimethyl-Chlorsilan behandelt.

Die DE 10 2012 007 932 A1 beschreibt die Schwierigkeiten, Aktivkohle mit Imprägnierungen oder anderen Modifikationen zu versehen. Zur Bewältigung wird eine Verfahrensführung vorgeschlagen, mit der über eine Oberflächenoxidation eine mit Stickstoff modifizierte bzw. funktionalisierte Aktivkohle erhalten wird, mit der eine gleichzeitige Physisorption und Chemisorption erreicht wird und die gleichermaßen reaktive und katalytische Eigenschaften aufweist. Sie ist jedoch nicht explizit hydrophobiert. Weitere Schwierigkeiten und der damit verbundene Aufwand werden in der WO 2015/158450 A1 beschrieben.

Der Erhalt der Diffusionsfähigkeit der Adsorptionsmittel, welche beispielsweise aus DE 10 2011 116 863 A1 bekannt sind, ist hier ebenfalls relevant, um die Adsorption bzw. Aufnahme der entzündlichen und/oder toxischen Kältemittel durch das Adsorptionsmittel unvermindert zu erhalten. Dadurch kann ein der Adsorber kleiner dimensioniert werden. Bauraum und Kosten können eingespart werden.

Die erste Aufgabe der Erfindung ist daher die Bereitstellung geeigneter hydrophobierter Aktivkohlen. Die Aufgabe wird dadurch gelöst, dass zum Hydrophobieren des Adsorbens eine chemische Oberflächenmodifizierungsmethode vorgenommen wird, um hydrophobe Gruppen in die innere und äußere Oberfläche des Adsorbens, insbesondere bei Aktivkohle einzubringen, so dass die Hydrophobie der Oberfläche des Adsorbens, insbesondere bei Aktivkohle verbessert und die selektive Adsorptionskapazität des Adsorbens, insbesondere bei Aktivkohle für unpolare Substanzen wie R290 (Propan) verbessert wird.

Hydrophobierte Aktivkohlen sind im Stand der Technik schon häufig beschrieben worden, nicht jedoch im Einsatz für Sicherheitseinrichtungen in Wärmepumpen. Die WO 2023 103 997 A1 beschreibt eine fluorfreie, wasserfeste und feuchtestabile superhydrophobe Aktivkohle sowie die Herstellung und die Nutzung.

In Ausgestaltungen der Oberflächenmodifizierungsmethode ist vorgesehen, dass alternativ
- Silan, Silikonöl, Fluorsilan oder Stearinsäure als hydrophobe Modifikatoren eingesetzt wird und eine Flüssigphasenimprägnierung und Hochtemperaturtrocknung durchgeführt wird, solche Verfahren werden beispielsweise in der CN 111 330 543 A, der WO 2023/103997 A1 und der CN 103 045 079 A beschrieben,
- Chlorsilan direkt auf die Oberfläche der Aktivkohle aufgesprüht wird mittels eines hydrophoben Modifizierungsmittels, das Tetraethoxysilan enthält, danach eine Hydrolyse von Tetraethoxysilan zur Bildung von Nanosilika erfolgt, die die Oberflächen der Aktivkohle bedecken und eine hydrophobe Schicht bilden, solche Verfahren werden beispielsweise in der CN 104 437 444 A, der CN 117 303 380 A und der CN 112 371 083 A beschrieben,
- superhydrophober Aktivkohle erzeugt wird, indem die Aktivkohle zunächst oxidiert und mit konzentrierter Salpetersäure modifiziert wird, um reichlich Carboxyl auf der Oberfläche zu bilden, und dann mit einem hydrophoben Modifizierungsmittel, nämlich Trimethylchlorsilan, behandelt wird, so dass Methylgruppen in einer chemischen Bindung auf die Oberfläche des Adsorbens bzw. der Aktivkohle gepfropft werden, solche Verfahren werden beispielsweise in der CN 1101 42 030 A und in der CN 117 772 153 A beschrieben,
- hydrophobe Aktivkohlen durch Kaltplasmamodifikation durch Aussetzung des Kohlenstoffmaterials einem Plasma, insbesondere einem thermischen Plasma, ausgesetzt und durch Einwirkung des Plasmas auf der Oberfläche des Kohlenstoffmaterials im Vergleich zur Struktur des Kohlenstoffmaterials neue hydrophobe Kohlenstoffstruktur erzeugt werden, solche Verfahren werden beispielsweise in der CN 104 437 444 A, der KR 10-1908457 A, der CN 110 237 822 A, der CN 113 368 827 A, der CN 112 371 083 A, der CN 113 148 977 A, der EP 343 40 80 A1, der CN 109 455 715 A, der CN 112 796 093 A , der CN 115 073 795 und der CN 110 354 807 A beschrieben.
- Entfernung polarer Bindungsgruppen durch Waschen mit Säuren und/oder Laugen aus der Aktivkohle.

Während die Herstellung solcher hydrophobierten Aktivkohlen bekannt ist, fehlt es an Hinweisen darauf, dass sie für die Absicherung von Wärmepumpen oder generell Kältekreisen, die mit brennbaren Kältemitteln betreiben werden, geeignet und einsetzbar sind.

In weiteren Ausgestaltungen ist vorgesehen, die Aktivkohle mit Methyltrimethoxysilan zu behandeln. Derartige Verfahren sind beispielsweise in der CN 103 421 432 A, der CN 103 818 069 A, der CN 106 700 936 A, der CN 108 002 749 A, und der CN 104 073 031 beschrieben, für den Einsatz im vorliegenden Fall sind sie ebenfalls nicht bekannt worden. Die Behandlung findet alternativ statt, indem:
- die Aktivkohle mit einem Umsetzungsprodukt aus Methyltrimethoxysilan und Propylenglykol 1:1,5 behandelt wird,
- die Aktivkohle mit einem Umsetzungsprodukt aus Methyltrimethoxysilan, Glycerin (Propan1,2,3-triol) und Wasser 1:0,5:1 modifiziert wird,
- sie Aktivkohle mit einem Umsetzungsprodukt aus Methyltrimethoxysilan, Milchsäure (2Hydroxypropionsäure) und Wasser 1:1,5:1,3 behandelt wird,
- die Aktivkohle mit einem Umsetzungsprodukt aus Methyltrimethoxysilan, Glycerin (Propan1,2,3-triol) und Wasser 1:0,33:2 behandelt wird,
- die Aktivkohle mit einem Umsetzungsprodukt aus Methyltrimethoxysilan, Milchsäure (2Hydroxypropionsäure) und Wasser 1:0,95:1,5 behandelt wird.

Die bestimmungsgemäßen hydrophobierten Aktivkohlen betreffen auch das Bettdesign der Adsorber und die Ausführungsformen des Sicherheitsmoduls. Hierbei muss unterschieden werden, ob Wasser flüssig vorliegt oder als Wasserdampf Teil eines Gasstroms ist.

Für den wasserdampfhaltigen Gasstrom gilt, dass die Co-Adsorption durch die thermisch induzierte Pendelströmung zwischen dem Inneren des Kältekreisgehäuses und dem Aufstellungsraum grundsätzlich begünstigt wird. Bei entsprechender Auslegung der Bettlänge wird das Verschiebevolumen innerhalb des Bettes so klein, das es nur anteilig oder gar nicht zu einem Austausch der Gasmassen kommt, wobei Diffusionsprozesse hier nicht betrachtet werden müssen. Dadurch ergibt sich eine unterschiedliche Wasserdampfkonzentration / Wasserdampfbelastung entlang der Bettschüttung.

Das Sorptionsbett wird daher für den Gasstrom geschichtet aufgebaut. Die Aufnahmekapazität eines nicht hydrophobierten Adsorptionsmittels ist im Allgemeinen gegenüber einem nicht-polaren Sorbens höher, sofern es sich um eine Gasströmung handelt.
- Der nicht hydrophobierte Anteil an Aktivkohle wird vor allem in der Mitte des Bettes eingefüllt, die beiden Randgebiete schützen das Bett vor Co-Adsorbenzien, wenn die Pendelströmung nicht in das Innere des Bettes vordringen kann.
- Nur der Eintrittsbereich des Sorptionsbettes von der Kältekreisseite aus wird mit hydrophobiertem Adsorbens beladen. Die Pendelströmung kann im Allgemeinen nicht in den nicht hydrophobierten Anteil des Sorptionsbettes vordringen. Die Feuchtebeladung des Sorptionsbettes durch den im Aufstellungsraum herrschenden Wasserdampfpartialdruck ist unkritisch durch die Adsorptionseigenschaft des verwendeten Adsorptionsmaterials (Lage der Wasser-Isothermen)
- Nur der Austrittsbereich des Sorptionsbettes zum Aufstellungsraum wird mit hydrophobiertem Adsorbens beladen. Die Pendelströmung kann im Allgemeinen nicht in den nicht hydrophobierten Anteil des Sorptionsbettes vom Aufstellungsraum aus vordringen.
- Die Bereiche des Sorptionsbettes mit den unterschiedlichen Sorptionsmaterialien sind durch Strömungsblenden voneinander getrennt, um Diffusionsprozesse entlang der Lauflänge des Sorptionsbettes zu verlangsamen.
- Die Strömungsblenden können auch unabhängig von den Materialgrenzen im Bett verteilt sein.
- Die Bettschüttung kann mit hydrophilem Material angereichet werden, wobei die Temperaturabhängigkeit der Beladung (Isothermenlage) einen größeren Gradienten als den des Sorptionsmaterials zur Adsorption des Kältemittels besitzt. Bei geringen Temperaturen belädt sich das hydrophile Material schneller als das andere Sorptionsmittel, während es sich bei höheren Temperaturen schneller entlädt. Das Bettdesign sollte in diesem Fall einen teilweisen oder vollständigen Austausch mit dem Aufstellungsraum ermöglichen, um die Abgabe des desorbierten Wasserdampfes zu ermöglichen

Die Erfindung löst diese Aufgabe mittels eines Systems von mindestens zwei Sorptionsschleusen, die mit Sorptionsmittel ausgestattet sind, von denen eine Sorptionsschleuse für gasförmige Stoffe und eine weitere Sorptionsschleuse für wässrige Stoffe vorgesehen ist und in denen wenigstens jeweils ein Teil des Sorptionsmittels hydrophobierte Aktivkohle ist. Hierbei wird vorgesehen, dass ein Kältekreisgehäuse, in welchem ein linksdrehender thermodynamischer Kreisprozess mittels eines gefährlichen Arbeitsfluids geführt wird, und in welchem Kältekreisgehäuse Sicherheitsventile und/oder Gasabscheider in wässrigen und/ oder kältemittelführenden Leitungen angeordnet sind, mit eines solchen System von Sorptionsschleusen fest verbunden werden.

Sollte also eine Leckage auftreten, bewirkt der dabei entstehende Überdruck, dass das Luftgemisch aus dem Kältekreisgehäuse direkt zur Umwelt austreten kann, wobei der inerte Luftanteil aus dem Kältekreisgehäuse durch das austretende Kältemittel verdrängt wird und durch den gesamten Adsorber direkt zur Umwelt austreten kann.

In einer weiteren Ausgestaltung ist vorgesehen, dass die Sorptionsschleuse für gasförmige Stoffe immer zur Umgebung hin offen ist, also atmen kann, während die Sorptionsschleuse für wässrige Stoffe zur Umgebung hin verschlossen ist und nur im Bedarfsfall geöffnet wird. Auf diese Weise kann kein Überdruck entstehen, der über den Druckverlust des Festbetts der Sorptionsschleuse für gasförmige Stoffe hinausgeht. Im Übrigen sind beide Sorptionsschleusen zum Kältekreisgehäuse hin stets offen und kontaminierte Stoffe können jederzeit in die Festbetten eintreten und dort adsorbiert werden.

Weitere Ausgestaltungen betreffen die Verwendung von hydrophobierter Aktivkohle. Hierbei wird vorgesehen, dass in der Vorrichtung hydrophobierte Aktivkohle verwendet wird, die entsprechend den oben beschriebenen Methoden oberflächenmodifiziert worden ist.

Die Erfindung wird nachfolgend anhand zweier Beispiele näher erläutert. Dabei zeigen:
Fig. 1 schematisch eine Wärmepumpe mit zwei Sorptionsschleusen (29, 30),
Fig. 2 die gleiche Wärmepumpe in gekapselter Ausführung.
Beide Figuren zeigen dabei Wärmepumpen nach dem Stand der Technik, die in einem Wohngebäude aufgestellt sind.

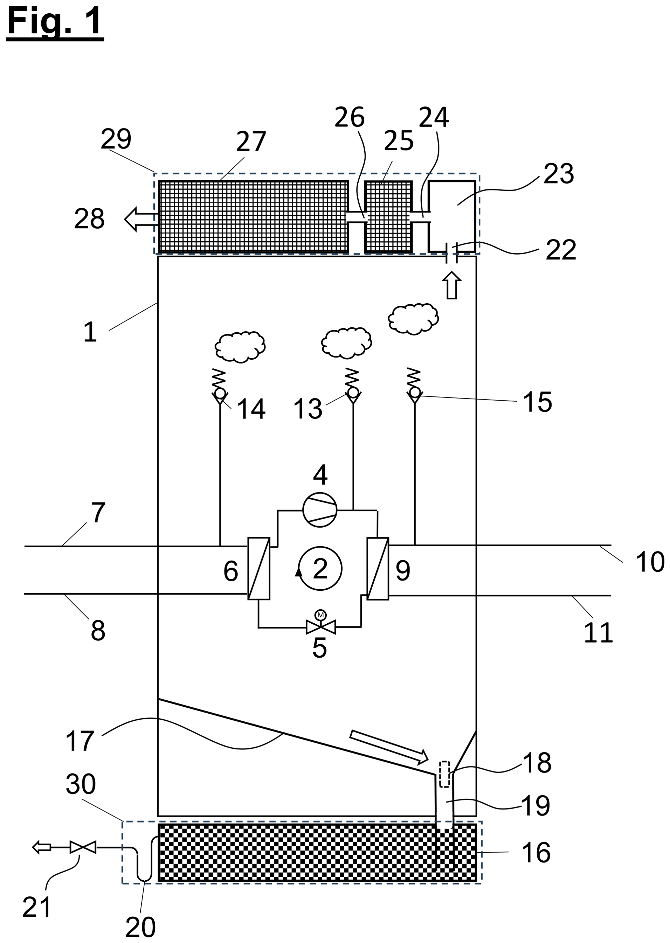

Fig. 1 zeigt ein Kältekreisgehäuse 1 mit einem Kältekreis 2, darin befinden sich der Verdichter 4, das Entspannungsventil 5 sowie der Kondensator 6 des Heizkreises mit den Anschlüssen des Heizungsvorlaufs 7 und des Heizungsrücklaufs 8 und der Verdampfer 9 des Wärmequellenkreislaufs mit den Anschlüssen für Kühlsolevorlauf 10 und Kühlsolerücklauf 11.

Problematisch bleiben die Sicherheitsventile 13, 14 und 15 des Kältekreises, des Heizungskreises und des Kühlsolekreises, wobei in letzteren beiden auch zusätzlich Gasabscheider vorgesehen sein können. Sobald diese Ventile ansprechen, ist mit Wasser in dampfförmiger und flüssiger Form zu rechnen, zusätzlich mit Kältemittel.

In diesem Fall kommen die beiden Sorptionsschleusen (29, 30) zum Einsatz. Oben befindet sich die Sorptionsschleuse 1 für gasförmige Emissionen und unten befindet sich die Sorptionsschleuse 2 für wässrige Emissionen. Unter dem Kältekreisgehäuses 1 ist die Flüssigkeits-Adsorptionsvorrichtung 16 angeordnet, die einen Teil der Sorptionsschleuse 2 bildet. Im unteren Bereich des Kältekreisgehäuses 1 ist eine Auffangvorrichtung 17 vorgesehen, die ablaufende oder abtropfende Flüssigkeit auffängt. Je nachdem, welches der Sicherheitsventile anspricht, handelt es sich dabei um wässrige Kühlsole oder um Heizkreiswasser, jeweils mit möglicherweise gelöstem Kältemittel, welches abzuscheiden ist. Die Auffangvorrichtung 17 verfügt über einen Ablauf 18, der mit einem Sieb ausgestattet ist, auch weitere Filtereinrichtungen können im Ablauf 18 integriert sein.

Der Ablauf 18 führt über einen Ablaufschacht 19 direkt in die Flüssigkeits-Adsorptionsvorrichtung 16, die mit einem Adsorptionsbett ausgestattet ist, in welchem hydrophobierte Aktivkohle eingefüllt ist. und welches auch Einbauten wie Umlenkbleche oder dergleichen aufweisen kann. Die Flüssigkeit verlässt das Adsorptionsbett über den Siphon 20 und ein Ventil 21, welches entweder im Bedarfsfall geöffnet wird oder über einen automatischen Öffnungsmechanismus verfügt. Um gasförmigen Durchbruch auszuschließen, ist das Ventil 21 im Normalfall geschlossen. Die Sorptionsschleuse 2 wird dabei gebildet aus dem Ablauf 18, den Ablaufschacht 19, der Flüssigkeits-Adsorptionsvorrichtung 16 und dem Siphon 20.

Über dem Kältekreisgehäuse 1 ist die Sorptionsschleuse 29 angeordnet, bestehend aus dem Einlaufschacht 22, der Vorkammer 23, dem ersten Sektionsübergang 24, dem ersten Festbettadsorber 25, dem zweiten Sektionsübergang 26, dem zweiten Festbettadsorber 27 und dem Gasauslass 28. Einlaufschacht und Sektionsübergänge dienen dabei vor allem der Vergleichmäßigung von Gasströmungen, damit sich im Festbett keine Stromfäden bilden und damit die Aktivkohleschüttung ruhig bleibt. Die Aktivkohleschüttung im Festbettadsorber 25 ist dabei hydrophobiert, damit Wasserdampfanteile im entweichenden Gas die Abscheidung von Kältemittel nicht stören. Im Festbettadsorber 27 kann dagegen auf die Hydrophobierung verzichtet werden und die Aktivkohle darin kann auf maximale Kapazität für das jeweilige Kältemittel hin optimiert werden.

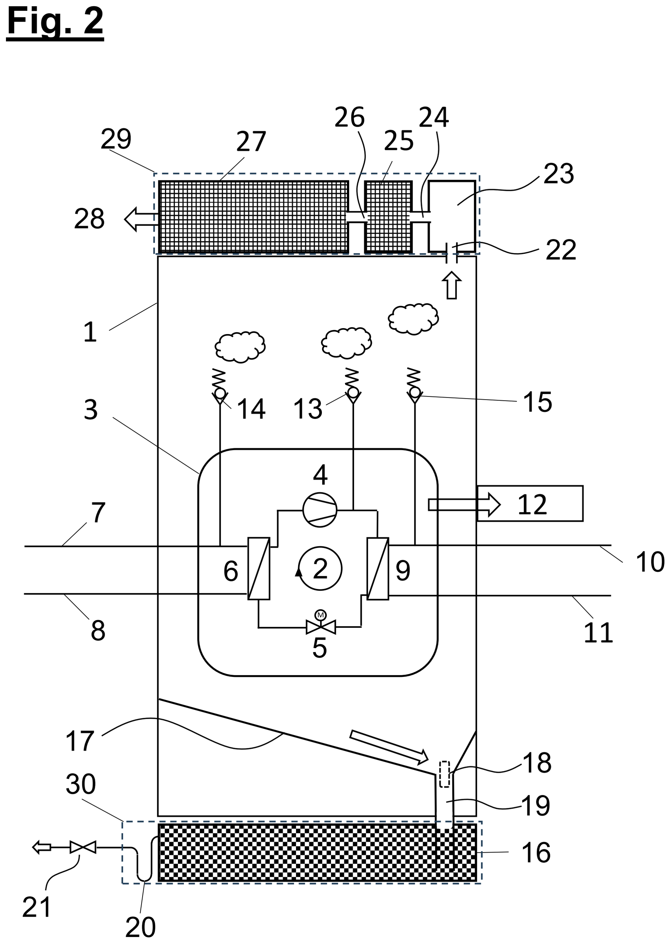

Fig. 2 zeigt die gleiche Wärmepumpe mit einem Kapselgehäuse 3. Innerhalb des Kapselgehäuses befinden sich der Verdichter 4, das Entspannungsventil 5 sowie der Kondensator 6 des Heizkreises mit den Anschlüssen des Heizungsvorlaufs 7 und des Heizungsrücklaufs 8 und der Verdampfer 9 des Wärmequellenkreislaufs mit den Anschlüssen für Kühlsolevorlauf 10 und Kühlsolerücklauf 11. Sofern im Kältekreis 1 eine Leckage auftritt, wird das sich einstellende Kältemittel-Luftgemisch mit bekannten Abscheidemitteln 12 aus dem Kapselgehäuse 3 abgeführt und entsorgt oder aufgefangen. Im einfachsten Fall wird es über eine Leitung außerhalb des Gebäudes geführt. Die übrigen Teile entsprechen denen in Fig. 1.

### Bezugszeichenliste

- 1: Kältekreisgehäuse
- 2: Kältekreis
- 3: Kapselgehäuse
- 4: Verdichter
- 5: Entspannungsventil
- 6: Kondensator
- 7: Heizungsvorlauf
- 8: Heizungsrücklauf
- 9: Verdampfer
- 10: Kühlsolevorlauf
- 11: Kühlsolerücklauf
- 12: Abscheidemittel
- 13: Sicherheitsventil Kältekreis
- 14: Sicherheitsventil Heizungskreis
- 15: Sicherheitsventil Kühlsolekreis
- 16: Flüssigkeits-Adsorptionsvorrichtung
- 17: Auffangvorrichtung
- 18: Ablauf
- 19: Ablaufschacht
- 20: Siphon
- 21: Ventil
- 22: Einlaufschacht
- 23: Vorkammer
- 24: erster Sektionsübergang
- 25: erster Festbettadsorber
- 26: zweiter Sektionsübergang
- 27: zweiter Festbettadsorber
- 28: Gasauslass
- 29: Sorptionsschleuse 1
- 30: Sorptionsschleuse 2

## Patentansprüche

**1.** System von Sorptionsschleusen (29, 30) für ein Kältekreisgehäuse (1), in welchem ein linksdrehender thermodynamischer Kreisprozesses (2) mittels eines gefährlichen Arbeitsfluids in einem geschlossenen, hermetisch dichten Arbeitsfluidumlauf geführt wird und in welchem Kältekreisgehäuse (1) Sicherheitsventile (13, 14, 15) und/oder Gasabscheider in wässrigen und/ oder kältemittelführenden Leitungen (7, 8,10,11) angeordnet sind,
**dadurch gekennzeichnet, dass**
- in diesem System von Sorptionsschleusen (29, 30) mindestens zwei Sorptionsschleusen (29, 30) vorgesehen sind, die mit Sorptionsmittel ausgestattet sind,
- eine Sorptionsschleuse (29) für gasförmige Stoffe und eine weitere Sorptionsschleuse (30) für wässrige Stoffe vorgesehen wird,
- die Sorptionsschleusen (29, 30) mit dem Kältekreisgehäuse (1) fest verbunden sind,
- mindestens ein Teil des Sorptionsmittels in einer der Sorptionsschleusen (25) hydrophobierte Aktivkohle ist.

**3.** Vorrichtung nach Anspruch 1, **dadurch gekennzeichnet, dass** die Sorptionsschleuse (29) für gasförmige Stoffe immer zur Umgebung hin offen ist, während die Sorptionsschleuse (30) für wässrige Stoffe zur Umgebung hin verschlossen ist und nur im Bedarfsfall geöffnet ist.

**3.** Vorrichtung nach einem der Ansprüche 1 oder 2, **dadurch gekennzeichnet, dass** hydrophobierte Aktivkohle eingesetzt wird, die nach einer der folgenden Methoden hergestellt worden ist:
- Silan, Silikonöl, Fluorsilan oder Stearinsäure als hydrophobe Modifikatoren eingesetzt wird und eine Flüssigphasenimprägnierung und Hochtemperaturtrocknung durchgeführt wird,
- Chlorsilan direkt auf die Oberfläche der Aktivkohle aufgesprüht wird mittels eines hydrophoben Modifizierungsmittels, das Tetraethoxysilan enthält, danach eine Hydrolyse von Tetraethoxysilan zur Bildung von Nanosilika erfolgt, die die Oberflächen der Aktivkohle bedecken und eine hydrophobe Schicht bilden,
- superhydrophober Aktivkohle erzeugt wird, indem die Aktivkohle zunächst oxidiert und mit konzentrierter Salpetersäure modifiziert wird, um reichlich Carboxyl auf der Oberfläche zu bilden, und dann mit einem hydrophoben Modifizierungsmittel, nämlich Trimethylchlorsilan, behandelt wird, so dass Methylgruppen in einer chemischen Bindung auf die Oberfläche des Adsorbens bzw. der Aktivkohle gepfropft werden.
- hydrophobe Aktivkohlen durch Kaltplasmamodifikation durch Aussetzung des Kohlenstoffmaterial einem Plasma, insbesondere einem thermischen Plasma, ausgesetzt und durch Einwirkung des Plasmas auf der Oberfläche des Kohlenstoffmaterials im Vergleich zur Struktur des Kohlenstoffmaterials neue hydrophobe Kohlenstoffstruktur erzeugt werden,
- Entfernung polarer Bindungsgruppen durch Waschen mit Säuren und/oder Laugen aus der Aktivkohle.

**4.** Vorrichtung nach einem der Ansprüche 1 oder 2, **dadurch gekennzeichnet, dass** die Aktivkohle mit Methyltrimethoxysilan behandelt ist, indem alternativ:
- die Aktivkohle mit einem Umsetzungsprodukt aus Methyltrimethoxysilan und Propylenglykol 1:1,5 behandelt wird,
- die Aktivkohle mit einem Umsetzungsprodukt aus Methyltrimethoxysilan, Glycerin (Propan1,2,3-triol) und Wasser 1:0,5:1 modifiziert wird,
- sie Aktivkohle mit einem Umsetzungsprodukt aus Methyltrimethoxysilan, Milchsäure (2Hydroxypropionsäure) und Wasser 1:1,5:1,3 behandelt wird,
- die Aktivkohle mit einem Umsetzungsprodukt aus Methyltrimethoxysilan, Glycerin (Propan1,2,3-triol) und Wasser 1:0,33:2 behandelt wird,
- die Aktivkohle mit einem Umsetzungsprodukt aus Methyltrimethoxysilan, Milchsäure (2Hydroxypropionsäure) und Wasser 1:0,95:1,5 behandelt wird.
